(19) **Europäisches Patentamt**

**European Patent Office**

**Office européen des brevets**

(11) **EP 1 211 476 B1**

(12) **EUROPEAN PATENT SPECIFICATION**

(45) Date of publication and mention
of the grant of the patent:
**24.08.2005 Bulletin 2005/34**

(51) Int Cl.⁷: **G01B 7/00**, G01B 7/30,
G01D 5/14

(21) Application number: **00955108.6**

(22) Date of filing: **29.08.2000**

(86) International application number:
**PCT/JP2000/005842**

(87) International publication number:
**WO 2001/020250 (22.03.2001 Gazette 2001/12)**

(54) **NONCONTACT POSITION SENSOR**

BERÜHRUNGSLOSER STELLUNGSSENSOR

CAPTEUR DE POSITION SANS CONTACT

(84) Designated Contracting States:
**DE FR GB IT**

(30) Priority: **09.09.1999 JP 25540999**

(43) Date of publication of application:
**05.06.2002 Bulletin 2002/23**

(73) Proprietor: **MIKUNI CORPORATION
Tokyo 101-0021 (JP)**

(72) Inventors:
• **MURAJI, Tetsuo,
c/o Mikuni Corporation Odawara B
Odawara-shi, Kanagawa 250-0055 (JP)**
• **SEKIYA, Mitsuru,
c/o Mikuni Corporation Odawara B
Odawara-shi, Kanagawa 250-0055 (JP)**

(74) Representative: **Betten & Resch
Patentanwälte,
Theatinerstrasse 8
80333 München (DE)**

(56) References cited:
EP-A2- 0 611 951     JP-A- 8 285 518
JP-A- 9 014 908     US-A- 4 535 289
US-A- 5 861 745

**Description**

Technical Field

The present invention relates to a non-contact type position sensor employing a hall element for sensing changes in magnetic flux and converting the changes to a voltage, and in particular relates to a sensor employing a stator with three magnet facing sides that face magnets.

Background Art

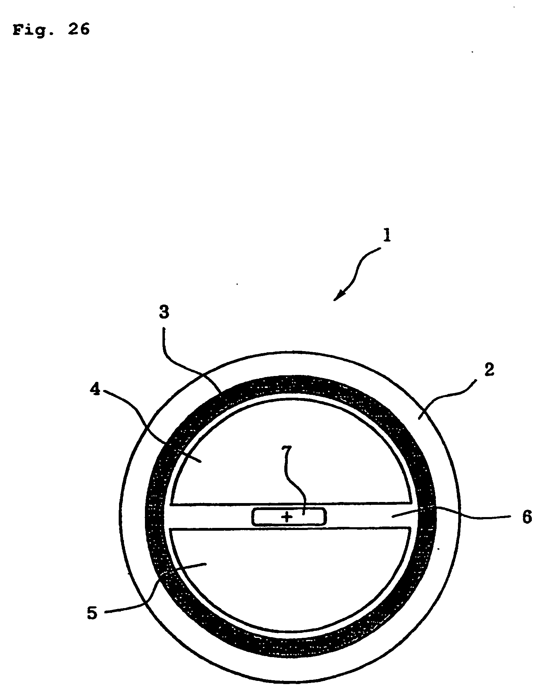

Rotary sensors and linear sensors are examples of non-contact type position sensors employing a hall element. FIG. 26 is a cross-sectional view of the center of a related rotary sensor disclosed in Japanese Laid-open Publication No. Hei. 8-35809 (JP-A-8035809). As shown in FIG. 26, a coupling shaft 1 has a cylindrical rotor 2 on an outer side, with a cylindrical permanent magnet 3 being fixed to the inner side of the rotor 2.Two semi-cylindrical stators 4 and 5 are then fixed at the inner side of the permanent magnet 3 in such a manner as to leave a slight gap with respect to the permanent magnet 3. A gap 6 extending diameter-wise is formed between the stators 4 and 5 and a hall element 7 is provided in the gap 6.

When the cylindrical rotor 2 and the permanent magnet 3 rotate about the periphery of the stators 4 and 5, the magnetic flux passing through the hall element 7 changes. This change in magnetic flux is reflected as a change in the voltage of the hall element 7. The angle of rotation of the rotor 2 can then be measured by measuring the change in this voltage.

FIG. 27 is a view showing a configuration for a linear sensor disclosed in Japanese Patent Publication No. Hei. 7-500421 (JP-T-7500421). This sensor comprises a hall element 11, stators 12 and 13 provided so as to sandwich the hall element 11, and a moveable magnet 14, with a further stator 15 being provided on the opposite side to the stators 12 and 13 of the moveable magnet 14.

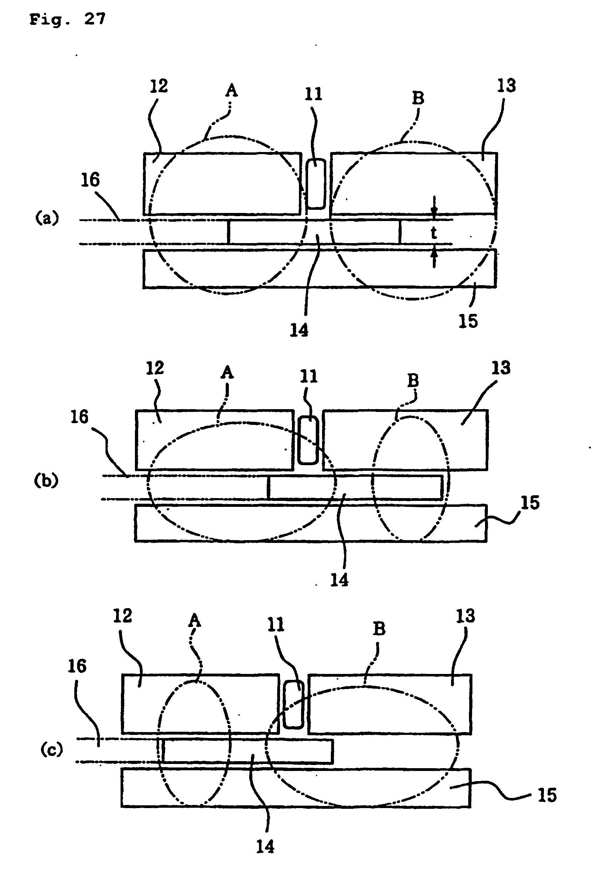

The moveable magnet 14 is fitted to a slider 16, with the slider 16 moving in a lengthwise direction. When the moveable magnet 14 is located between the stators 12 and 13 as shown in FIG. 27(a), the two magnetic circuits A and B are formed in a symmetrical manner, so that magnetic flux passing through a hall element 11 located centrally becomes zero. When the moveable magnet 14 moves to the right as shown by (b) in FIG. 27, the balance between the magnetic circuits A and B breaks down and the hall element 11 becomes included in the magnetic circuit A. Changes in magnetic flux therebetween are then sensed and lengthwise movement of the slider 16 can be known. When the moveable magnet 14 moves to the left as shown by (c) in FIG. 27, the hall element 11 is included in magnetic circuit B and the position of the slider 16 can be detected from changes in magnetic flux therebetween.

In these related examples, the rotary sensor of FIG. 26 employs a toroidal permanent magnet. The output gradient is then set so that the output characteristic angle has a 180° cycle. However, only approximately 150° of the output characteristic angle is usable, with resolution falling accordingly when less than 150° is used.

On the other hand, with the linear sensor of FIG. 27, when the thickness (t) of the moveable magnet 14 is made large, the distance between the stators 12 and 13, and the stator 15 becomes large, therefore, leakage of magnetic flux increases, and the linearity of the output value becomes poor. When the thickness t is made small in order to avoid this, magnetic force becomes weak and a desired sensitivity cannot be obtained.

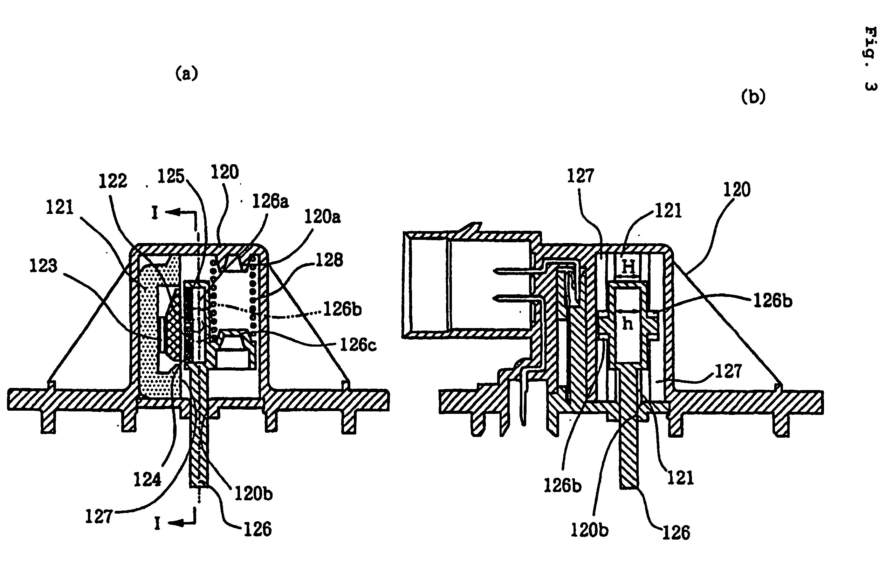

Prior art document US-A-5861745 discloses a position sensor according to the preamble of claim 1 in the specific case of a rotary sensor. In this case, two magnetically conductive segments which are fixed to a central axis form the first stator, and another magnetically conductive segment which is fixed to the same central axis forms the second stator. Magnetic flux lines can only pass from the first magnet facing side of the first segment to the second magnet facing side of the second segment and thus through the first stator by passing through an air gap. There is no possibility for magnetic flux lines to directly pass from the first segment to the second segment without having to pass through an air gap, because the central axis has to be non-magnetic in order not to cause a magnetic short-circuit with the further segment which forms the second stator (see Fig. 3 of this prior art document). This necessary "jump" of magnetic flux lines through an air gap weakens the magnetic field and thus negatively affects the obtainable resolution.

Furthermore, this prior art document emphasizes the importance of chosing magnets which, in the discussed case of a rotary sensor, extend over different arc segments and therefore have different lengths. However, as will be explained below, it has been found that this will negatively affect the sensitivity and linearity of the sensor. As a further disadvantage, this prior art document is limited to rotary sensors and does not teach a general concept that would also be applicable to linear sensors.

Prior art document US-A-4535289 discloses a linear position sensor for measuring the position of a moving body. A detected member made of magnetic material is secured to the moving body and an E-shaped magnet is arranged adjacent the measured member transverse to the direction of motion. A Hall IC for converting the variation of magnetic flux density of the magnet to the variation of voltage is secured to an end of a central leg portion of the magnet. The measured member is an elongated bar and is provided with a series of projections on the elongated bar at both sides. The projections of both sides are arranged in staggered relation. The Hall IC is adjacent to an inner portion of one of the projections when the moving body travels in the elongated direction. The Hall IC produces an output having a waveform with a zero level interval between inverted waves.

This document does not provide any general teaching that would be applicable to linear and rotary sensor, either.

As further prior art, reference is made to document EP-A-0611951, from which another type of rotary sensor is known, but which does not provide a general teaching for rotary and linear sensors, either.

In order to solve the aforementioned problems, it is the object of the present invention to provide a non-contact type position sensor where a basic configuration as a sensor is used in common, so that in the case of application to a rotary sensor, an arbitrary angle of usage can be set, and in the case of application to a linear sensor, a magnet can be made thick without increasing leakage of magnetic flux.

Disclosure of Invention

In order to achieve the aforementioned object, a non-contact-type position sensor of the present invention is configured as defined in claim 1. Advantageous embodiments are defined in dependent claims 2 to 14.

A feature of the configuration as a linear sensor is that the magnets are plate-shaped magnets supported by a slider and the slider is retractable along a straight-line locus. A further feature of the configuration as a rotary sensor is that the magnets are curved magnets supported by a rotor and the rotor is rotatable along an arced locus.

In the case of a linear sensor, a configuration may be adopted where the first and second stators are housed within a case, and a guide section maintaining a fixed distance between the magnets and the first and second stators, and a bearing section supporting the slider in a freely retractable manner are formed within the case.

At this time, the guide section may have rails formed within the case and one or a plurality of rollers provided at the slider. The rollers may then be provided as a pair close to the centers of gravity of the two magnets in directions orthogonal to the direction of retraction of the slider.

In the case of a rotary sensor, a configuration may be adopted where the first and second stators are housed within the case, a guide pin is erected at the cover of the case so as to pass through and support the first stator, with the rotor being axially supported in a freely rotatable manner at the guide pin passing through the first stator.

Further, the first and second stators may be housed within a case, a hollow coupling section may be formed at the rotor, and a projection section fitting with the hollow coupling section of the rotor may be provided at the case.

For these linear and rotary sensors, width in a direction orthogonal to the locus of the first and second stators and width in a direction orthogonal to the locus of the moveable magnets are preferably be substantially the same.

For a linear sensor where the two magnet facing sides of the first stator are located in a symmetrical manner at the sides of the one magnet facing side of the second stator, lengths of the magnet facing sides of the first stator are taken to be Sa1 and Sa2, a length of the magnet facing side of the second stator is taken to be Sa3, lengths of the two magnets are taken to be Ma1 and Ma2, a gap between the magnets is taken to be Ga1, gaps between the three magnet facing sides are taken to be Ga2 and Ga3, and a stroke of the magnets is taken to be 2L, a configuration where

$$Ma1=Ma2=2L-Ga1$$

$$Ga1=Ga2=Ga3$$

$$Sa1=Sa2=Sa3=Ma1$$

will give optimum sensitivity.

Similarly, for a linear sensor where the two magnet facing sides of the first stator are located in a symmetrical manner at the sides of the one magnet facing side of the second stator, lengths of the magnet facing sides of the first stator are taken to be Sb1 and Sb2, a length of the magnet facing side of the second stator is taken to be Sb3, lengths of the two magnets are taken to be Mb1 and Mb2, a gap between the magnets is taken to be Gb1, gaps between the three magnet facing sides are taken to be Gb2 and Gb3, and a stroke of the magnets is taken to be 2L, a configuration where

$$Mb1=Mb2=L-Gb1/2$$

$$Gb1=Gb2=Gb3$$

$$Sb1=Sb2=Sb3/2=Mb1$$

will be the most compact.

With a rotary sensor, the two magnet facing sides of the first stator are located in a symmetrical manner at the sides of the one magnet facing side of the second stator, central angles of the two magnet facing sides of the first stator are taken to be $S\theta a1$ and $S\theta a2$, a central angle of the magnet facing side of the second stator is taken to be $S\theta a3$, central angles of the two magnets are taken to be $M\theta a1$ and $M\theta a2$, a gap between the magnets is taken to be $G\theta a1$, gaps between the three magnet facing sides are taken to be $G\theta a2$ and $G\theta a3$, and a stroke of the magnets is taken to be $2\theta$, and a configuration where

$$M\theta a1 = M\theta a2 = 2\theta - G\theta a1$$

$$G\theta a1 = G\theta a2 = G\theta a3$$

$$S\theta a1 = S\theta a2 = S\theta a3 = M\theta a1$$

will give optimum sensitivity.

Further, when two magnet facing sides of the first stator are located in a symmetrical manner at the sides of the one magnet facing side of the second stator, central angles of the two magnet facing sides of the first stator are taken to be $S\theta b1$ and $S\theta b2$, a central angle of the magnet facing side of the second stator is taken to be $S\theta b3$, central angles of the two magnets are taken to be $M\theta b1$ and $M\theta b2$, a gap between the magnets is taken to be $G\theta b1$, gaps between the three magnet facing sides are taken to be $G\theta b2$ and $G\theta b3$, and a stroke of the magnets is taken to be $2\theta$, a configuration where

$$M\theta b1 = M\theta b2 = \theta - G\theta b1/2$$

$$G\theta b1 = G\theta b2 = G\theta b3$$

$$S\theta b1 = S\theta b2 = S\theta b3/2 = M\theta b1$$

will be the most compact.

Further, it is preferable for the intervening gap into which the hall element between the first stator and second stator is inserted to be substantially the same as the gap between the magnets and the gaps between the three magnet facing sides.

Brief Description of the Drawings

FIG. 1 is a view showing a configuration for a non-contact type position sensor of the present invention when applied to a linear sensor.

FIG. 2 is a view showing a configuration for a non-contact type position sensor of the present invention when applied to an angle sensor.

FIG. 3 is an assembly drawing of a non-contact type position sensor applied to a linear sensor, where FIG. 3(a) is a cross-sectional view of the center of a sensor, and FIG. 3(b) is a cross-sectional drawing along I-I of FIG. 3(a).

FIG. 4 is an assembly view of a non-contact type position sensor of the present invention when applied to an actual rotary sensor.

FIG. 5 is a view showing a further embodiment of a rotary sensor, where FIG. 5(a) is a cross-sectional view of a central part, FIG. 5(b) is a cross-sectional view along II-II of FIG. 5(a), and FIG. 5(c) is a view from III-III of FIG. 5(a).

FIG. 6 shows the relationship between the amount of displacement and output of the non-contact position sensor of the present invention.

FIG. 7 is an illustration of an embodiment of a linear type non-contact type position sensor of the present invention with an optimum sensitivity.

FIG. 8 shows the relationship between magnet length and linearity.

FIG. 9 shows how sensor stroke length L and magnet length Ma1 influence linearity of sensitivity.

FIG. 10 shows the relationship between gaps Ga2 and Ga3, and linearity.

FIG. 11 shows the relationship between a gap T between first and second stators and gaps Ga2 and Ga3.

FIG. 12 shows the relationship between gaps Ga1, Ga2 and Ga3, and linearity.

FIG. 13 shows the relationship between the lengths of magnet facing side of the second stator and length Ma1 of a moveable magnet.

FIG. 14 shows the relationship between lengths Sa1, Sa2 and Sa3 of magnet facing sides and a stroke length L.

FIG. 15 is an illustration of an embodiment of a linear type non-contact type position sensor of the present invention which is the most compact.

FIG. 16 shows the relationship between a length Mb1 of a moveable magnet and a stroke length L.

FIG. 17 shows the relationship between gaps Gb2 and Gb3.

FIG. 18 shows the relationship between a length Sb3 of a second stator, a length Mb1 of a moveable magnet and a stroke length L.

FIG. 19 shows the relationship between the sizes of magnet facing sides Sb1, Sb2 and Sb3.

FIG. 20 is an illustration showing generating conditions of a magnetic circuit of a linear sensor having an optimum sensitivity.

FIG. 21 is an illustration showing generating conditions of a magnetic circuit of a linear sensor being most compact.

FIG. 22 is an illustration showing an embodiment of a rotary type non-contact type position sensor of the present invention with an optimum sensitivity.

FIG. 23 is an illustration showing an embodiment of a rotary type non-contact type position sensor of the present invention being most compact.

FIG. 24 is an illustration showing generating conditions of a magnetic circuit of a rotary sensor having an optimum sensitivity.

FIG. 25 is an illustration showing generating conditions of a magnetic circuit of a rotary sensor being most compact.

FIG. 26 is an illustration showing a configuration for a related linear sensor.

FIG. 27 is an illustration showing a configuration for a related rotary sensor.

Best Mode for Carrying Out the Invention

The following is a description, referring to the drawings, of a non-contact type position sensor of the present invention.

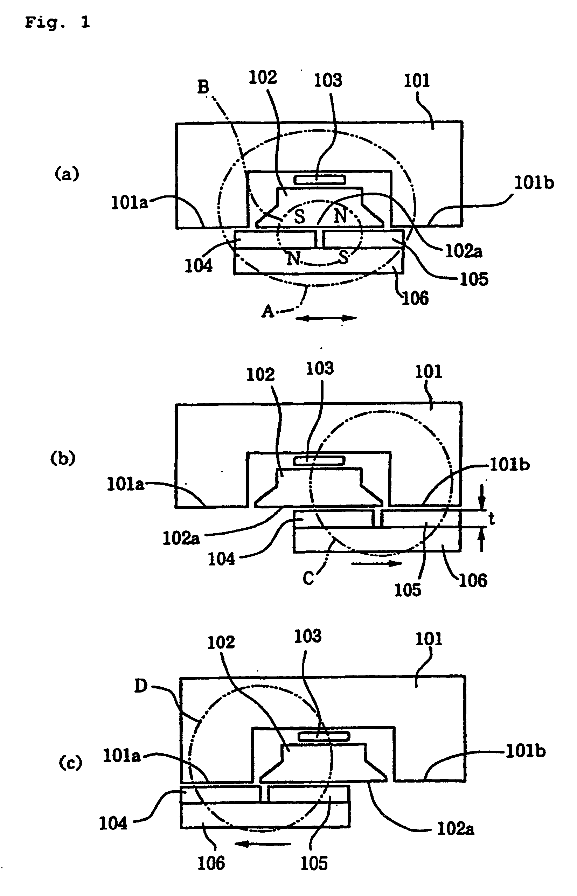

FIG. 1 is an illustration showing a basic configuration for a non-contact type position sensor of the present invention and gives an example of application to a linear sensor. A sensor of the present invention comprises a first stator 101, a second stator 102, a hall element 103 located between the first stator 101 and the second stator 102, moveable magnets 104 and 105 located facing the first stator 101, second stator 102 and hall element 103, and a slider 106 joining the moveable magnets. The first stator 101 is reverse-U-shaped and has magnet facing sides 101a and 101b on both sides, the second stator 102 has just one magnet facing side 102a, and these three magnet facing sides 101a, 101b and 102a are arranged along a single straight line. The arrangement of the first and second stators 101 and 102, and the hall element 103 is in the form of mirror symmetry. As shown by the arrow symbols in the drawings, the slider 106 is retractable in a longitudinal direction, with the amount of this movement being detected by this sensor.

The moveable magnets 104 and 105 are plate-shaped magnets having the same length arranged with a slight gap therebetween, with N and S magnetic poles formed along the direction of thickness, with the moveable magnets 104 and 105 being arranged as shown in the drawings in such a manner that the magnetic poles oppose each other. The arrangement of the magnetic poles is also the same for further embodiments disclosed in the following.

As shown in FIG. 1(a), when the moveable magnets 104 and 105 are exactly at the center, a magnetic circuit A is formed by the moveable magnets 104 and 105 and the first stator 101, a magnetic circuit B is formed by the moveable magnets 104 and 105, and the second stator 102, and the magnetic flux passing through the hall element 103 is zero.

As shown in FIG. 1(b), when the moveable magnets 104 and 105 come to the right end, a magnetic circuit C is formed by the moveable magnets and the right hand side of the first and second stators 101 and 102, and magnetic flux passes through the hall element 103. The magnetic flux passing through the hall element 103 gradually increases from zero as the moveable magnets move from the position in FIG. 1(a) to the right, and reaches a maximum in FIG. 1(b).

A voltage corresponding to changes in magnetic flux is outputted and the position of the moveable magnet, i.e. the position of the slider 106, can be detected.

When the moveable magnets 104 and 105 move to the left end as shown in FIG. 1(c), a magnetic circuit D deviating towards the left side of the first status 101 is formed. The direction of this magnetic flux is the opposite direction to that of the magnetic circuit C. Therefore, if amount of the movement of the slider 106 in the right direction is taken to be positive, then the amount of the movement in the left direction in FIG. 1 (c) can be detected as being negative.

The non-contact type position sensor of FIG. 1 has the following characteristics.

① The magnetic circuit has a closed-loop configuration and there is therefore only few leakage of magnetic flux.
② There is little fluctuation in output because it is difficult for the slider 106 to deviate in a direction at right angles to the direction of movement due to the magnetic force.
③ The leakage of magnetic flux does not increase even if the thickness t of the moveable magnets 104 and 105 is large.
④ The slider 106 is difficult to move even if subjected to vibration because the slider 106 is usually drawn towards the sides of the first and second stators 101 and 102.

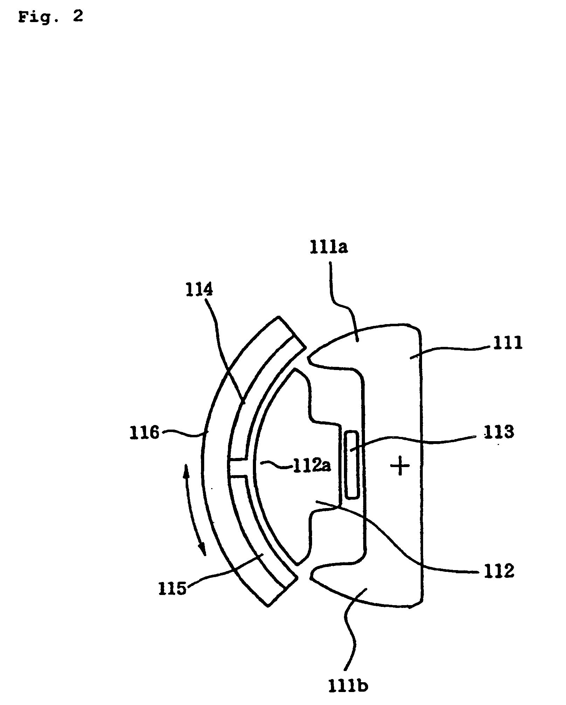

FIG. 2 is an illustration showing an embodiment of a non-contact type position sensor of FIG. 1 when applied to an angle sensor. This non-contact position sensor 110 comprises a first stator equipped with two magnet facing sides 111a and 111b, a second stator equipped with one magnet facing side 112a, a hall element 113 located between the first and second stators, moveable magnets 114 and 115, and a rotor 116 for fixing these moveable magnets.

The three magnet facing sides 111a, 111b and 112a are located on the same arc so as to collectively constitute what is substantially a semi-circle. On the other hand, the moveable magnets 114 and 115 are curved plate-shaped magnets having centers of curvatures that are the same as that of the arc of the magnet facing sides, and are located along the arc. The rotor 116 then rotates along this arc as shown by the arrow.

In this embodiment, when the moveable magnets 114 and 115 move along the arc, that corresponding to the magnetic circuits A, B, C and D is formed as for FIG. 1, the magnetic flux passing through the hall element 113 changes, and the angle of rotation of the rotor 116 can be detected by detecting this change.

FIG. 3 is an assembly drawing of a non-contact type position sensor applied to a linear sensor of the present invention, where FIG. 3(a) is a cross-sectional view of the center of a sensor, and FIG. 3(b) is a cross-sectional drawing along I-I of FIG. 3(a). In these drawings, the first stator 121 and the second stator 122 are housed within a space within the sensor case 120, with a hall element 123 being located between the first and second stators 121 and 122. The moveable magnets 124 and 125 are affixed to a third stator 126a within the slider 126 and are housed in such a manner as to face the first and second stators 121 and 122.

Rollers 126b are provided at both sides of the slider 126 and can roll freely on a rail 127 formed within the case 120. Further, a spring bearing section 126c is provided on the opposite side to the side facing the stator of the slider 126. A coil spring 128 is also fitted with the spring bearing 120a formed within the case 120 so as to normally urge the slider 126 in a downward direction as shown in the drawings.

With the above configuration, the slider 126 is supported at a bearing 120b of the case 120 so that when the moveable magnets 124 and 125 are drawn towards the first and second stators 121 and 122, the roller 126b comes into contact with the rail 127 so that the stators 121 and 122 cannot come any closer. The rollers 126b are provided near the center of gravity of the moveable magnets 124 and 125 and the third stator 126a and may therefore provide stable support to both the left and right when provided as a pair. Other configurations, such as providing pairs of rollers at the upper and lower ends of the moveable magnets 124 and 125 so as to give a total of four magnets, are also possible. Further, even if there is looseness between a bearing 120b and a slider 126, there is no hindrance due to the support of the roller 126b and the rail 127.

The slider is drawn towards the center of the stators by the moveable magnets 124 and 125 and therefore does not shift in a direction orthogonal to the direction of attraction of the moveable magnets 124 and 125. However, it is most preferable for a width H in a direction orthogonal to the direction of movement of the first and second stators 121 and 122 and a width h in the same direction for the moveable magnets 124 and 125 to be substantially the same.

In this manner, in the embodiment of the present invention, the slider 126 is supported by a pair of or a plurality of pairs of rollers 126b and a rail 127 in addition to the bearing 120b. The slider is therefore supported in a stable manner even if dimensional errors etc. occur, to enable smooth sliding. Moreover, even if vibrations are received from outside and a load is incurred at the slider and the moveable magnets, this load is hardly applied to the bearing 120b of the slider at all, and there is therefore little bearing friction. Further, as the structure is such that support is provided by a pair of rollers 126b and a bearing 120b, there is little mechanical hysterisis and therefore also little output hysterisis during operation.

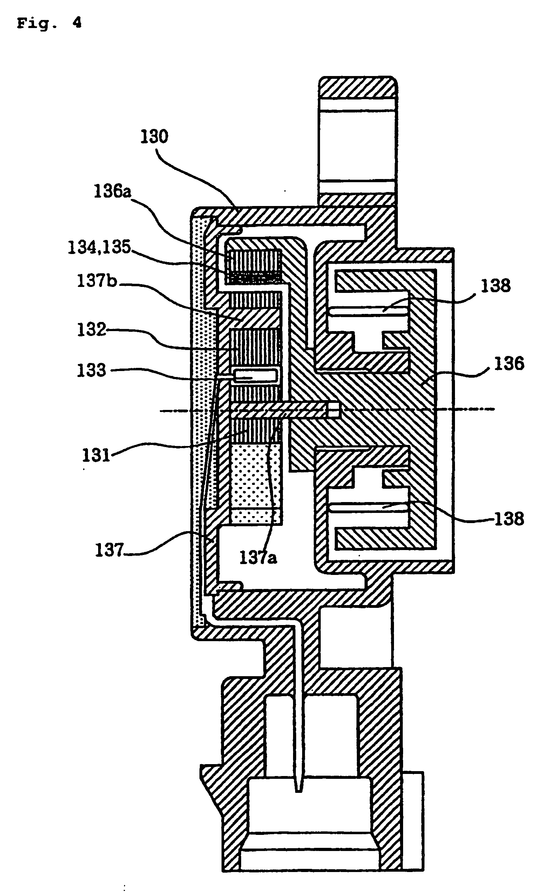

FIG. 4 is an assembly view of a non-contact type position sensor of the present invention when applied to an actual rotary sensor. In FIG. 4, the first stator 131 and the second stator 132 are provided within the case 130, with a hall element 133 being inserted between the first stator 131 and the second stator 132.

The space within the case 130 into which these items fit is sealed by a cover 137, with a guide pin 137a for supporting a rotor 136 in a freely rotatable manner and a pin 137b for fixing the second stator 132 being provided at this cover 137. The guide pin 137a passes through and supports the first stator 131, with the end that passes through fitting with the rotor 136 in such a manner that the rotor 136 is freely rotatable. The second stator 132 is fitted so as to be fixed to another pin 137b. Further, a spirally wound spring 138 is fitted into a space between the rotor 136 and the case 130, with the rotor 136 normally providing urging force so as to provide rotation in one direction taking the guide pin 137a as an axis. Although not shown in the drawings, a stopper is provided to stop rotation of the rotor 136 at a prescribed position.

Part of the rotor 136 is provided so as to extend to a position facing the second stator 132, with the third stator 136a being fitted at this location. The two arc-shaped moveable magnets 134 and 135 are located at the third stator along a single arc.

The positional relationship of the first and second stators, the moveable magnets and the rotor is basically the same as shown in FIG. 2.

As a result of the above configuration, the moveable magnets 134 and 135 rotate centered about the guide pin 137a, so as to move along an arc formed by the magnet facing sides of the first and second stators 131 and 132.

Looseness is provided at the engaging portion of the guide pin 137a and the rotor 136. Therefore, when drifting occurs in the direction of attraction of the magnets at the moveable magnets 134 and 135, there is attraction between the moveable magnets 134 and 135 and the first and second stators. The looseness therefore tends to one side, there is little influence on the output precision, there is almost no operation hysterisis, and there is therefore no influence on the operation.

When shifting of the rotor 136 occurs in a direction at right angles to the direction of attraction, this will become a shift in the direction of thrust of the guide pin. However, control is exerted in such a manner that the phases of the moveable magnets 134 and 135 and the first and second stators 131 and 132 are controlled to coincide, so that looseness in the thrust direction can also be absorbed.

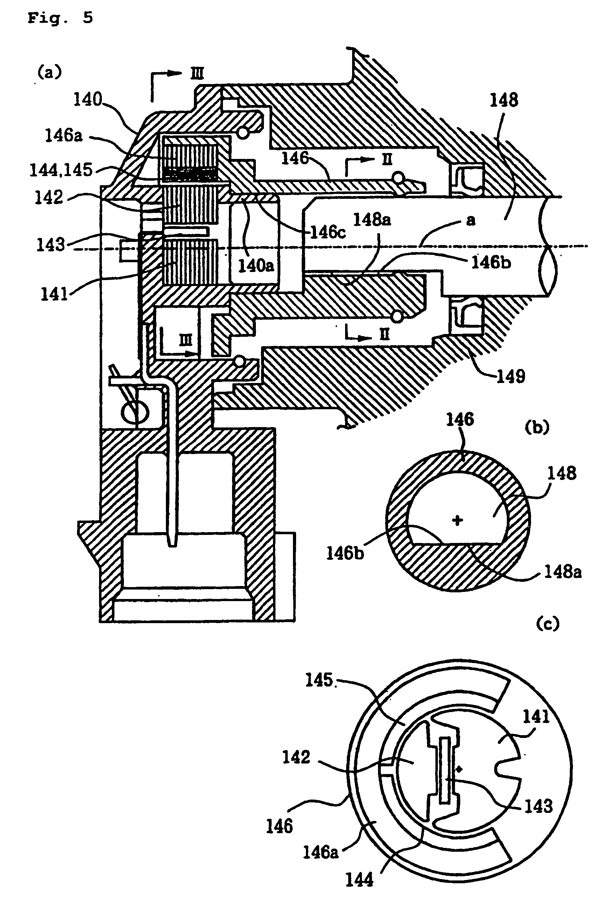

FIG. 5 shows an embodiment of the same rotary sensor as in FIG. 4, but in this embodiment a guide pin is not employed. FIG. 5(a) is a central cross-sectional view, FIG. 5(b) is a cross-sectional view taken along II-II of FIG. 5(a), and FIG. 5(c) is a view corresponding to FIG. 2, as viewed from III-III of FIG. 5(a).

The first stator 141 and the second stator 142 are arranged within the case 140 along an arc, with a hall element 143 being located therebetween, and the moveable magnets 144 and 145, and the third stator 146a being arranged on the outside. The moveable magnets 144 and 145 and the third stator 146a are fixed to the rotor 146 and are able to rotate freely due to rotation of the rotor via a gap slightly to the outside of the arc of the first and second stators.

A hollow coupling section 146c formed at one side of the rotor 146 fits with a case projection section 140a so that the rotor 146 is supported at the case 140 in a freely rotatable manner, while the other side of the rotor 146 is supported by a shaft 148 projecting from a body 149 to which the rotary sensor is mounted. As shown in FIG. 5(b), a notch 148a is provided at the tip of the shaft 148 and overlaps with the notch 146b formed at the rotor 146 so as to stop when twisted.

When the shaft 148 rotates taking the axis as the center of rotation, the moveable magnets 144 and 145 move along the arc and the flux passing through the hall element 143 changes, so that the angle of rotation of the shaft 148 can be measured.

When play in the direction of attraction of the moveable magnets 144 and 145 occurs at the engaging section of the rotor 146, the moveable magnets 144 and 145 attract the first and second stators 141 and 142 and the looseness is absorbed as a result of the approach of one side.

When shifting of the rotor 146 occurs in a direction at right angles to the direction of attraction, this is a shift in the direction of the axis a. However, control is exerted in such a manner that the phases of the moveable magnets 144 and 145 and the first and second stators 141 and 142 are controlled to coincide (so that the centers coincide), so that deviation in the thrust direction can also be absorbed.

Therefore, the influence on output precision due to this shifting and play is small and there is almost no operation hysterisis.

Namely, in the embodiments of FIG. 4 and 5, the rotor is normally automatically returned to a fixed position even when subjected to external force due to vibrations between the rotor and the moveable magnet and it is therefore difficult for the vibrations to exert any influence. There is also little wear because the influence of the vibrations is not applied to the bearing section of the rotor.

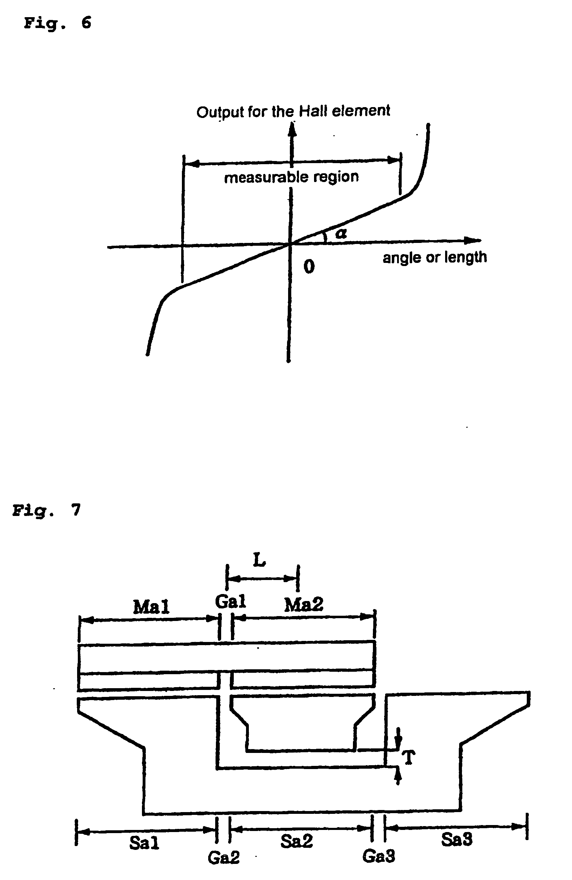

FIG. 6 is an illustration showing the relationship between the amount of displacement of the non-contact position sensor of the present invention and output. The vertical axis shows output for the hall element and the horizontal axis shows the length of movement in the case of a linear sensor, or the angle in the case of a rotary sensor. The non-contact position sensor of the present invention is formed in a symmetrical shape so that within a certain range from the center, there is a linear relationship between the change in magnetic force and the displacement in angle or length, as shown in FIG. 6. This linear portion then constitutes a measurable region. For an actual sensor, design is performed so that the displacement of angle and length falls in the vicinity of the center of this linear portion and at this time the gradient $\tan \alpha$ of the straight line expresses the sensitivity of the sensor. Generally, when the moveable magnet is made long, the sensitivity improves but this is not effective unless to make the shape of the stators larger proportional to the moveable magnets.

FIG. 7 shows an embodiment of a linear type non-contact type position sensor of the present invention for which sensitivity is the highest, i.e. FIG. 7 is an embodiment showing the relationship between the dimensions and position of the stators and the moveable magnets for giving optimum sensitivity. The basic configuration is the same as that disclosed in FIG. 1 but the magnet facing sides and the moveable magnets are long.

Lengths of the two magnet facing sides of the first stator are taken to be Sa1 and Sa2, a length of the magnet facing side of the second stator is taken to be Sa3, and lengths of the two moveable magnets are taken to be Ma1 and Ma2. A gap between the moveable magnets is taken to be Ga1 and gaps between the three magnet facing sides lined up along a straight line are taken to be Ga2 and Ga3. The stroke of the moveable magnets is taken to be L to each side from the center, giving a total of 2L.

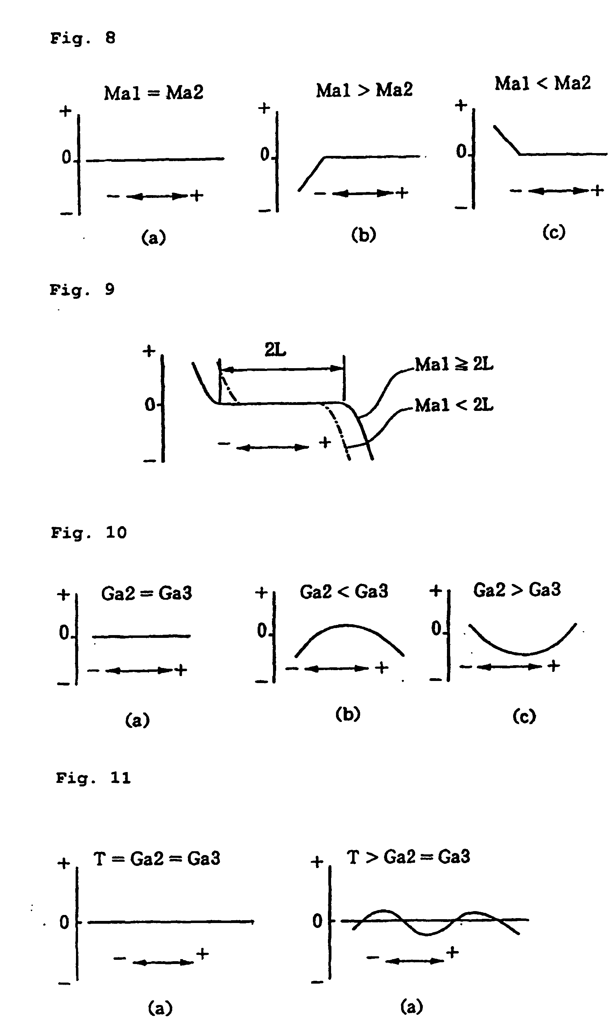

The following is a description of the relationship between the dimensions and position of each part for giving optimum sensitivity. First, regarding the relationship between the lengths Ma1 and Ma2 of the moveable magnets, as shown in FIG. 8, in the vicinity of Ma1=Ma2 is preferable.

Accordingly, a straight line characteristic is maintained with a linearity of zero when Ma1=Ma2 in FIG. 8(a). However, linearity between the amount of displacement and voltage is poor when Ma1>Ma2 as shown in FIG. 8(b), or when Ma1<Ma2 as shown in FIG. 8(c).

Next, with regards to the relationship between the length Ma1 and the stroke L of the moveable magnet, a length in the vicinity of Ma1=2L is preferable, with a length in the vicinity of Ma1=2L-Ga1 being particularly efficient. Further, when Ma1<2L, as shown by the dotted and dashed line in FIG. 9, linearity is poor within the stroke 2L. When Ma1>2L, there is no influence on linearity but there is unnecessary length with regards to the operation stroke, which is of little use.

FIG. 10 is an illustration showing the relationship between clearances Ga2 and Ga3 and linearity. As shown in FIG. 10(a), linearity is good in the vicinity of Ga2=Ga3, but linearity is poor when Ga2<Ga3 or when Ga2>Ga3 as shown in FIG. 10(b) and FIG. 10(c).

Next, regarding the relationship between the clearance T of the first and second stators into which the hall element is inserted and Ga2 and Ga3, linearity is good when T<Ga2=Ga3, and efficiency is particularly good in the vicinity of T=Ga2=Ga3 as shown in FIG. 11 (a). When T>Ga2=Ga3 a magnetic flux short cut arises, and linearity is poor as shown in FIG. 11 (b).

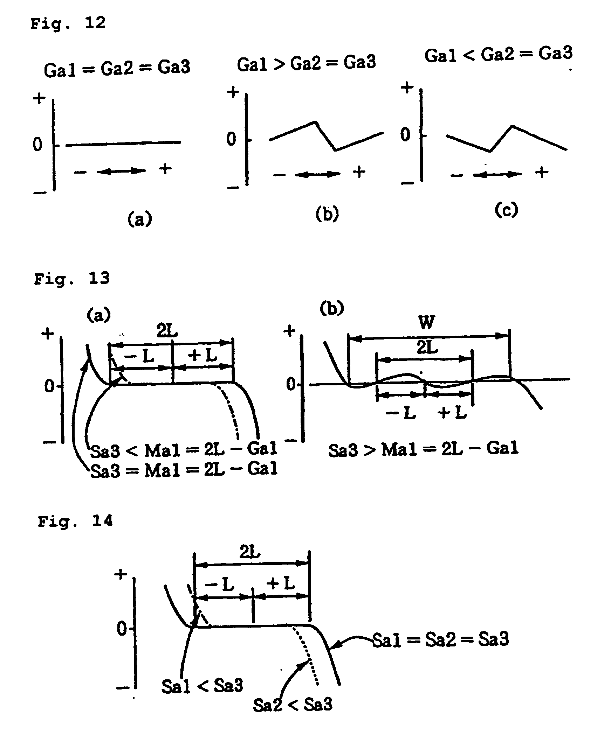

Regarding the relationship between the three clearances Ga1, Ga2 and Ga3, as shown in FIG. 12(a), in the vicinity of Ga1=Ga2=Ga3 the best linearity can be achieved. When Ga1>Ga2=Ga3, there is the tendency shown in FIG. 12(b), and Ga1<Ga2=Ga3 is as shown in FIG. 12(c), with linearity being poor in either case.

The relationship between the length Sa3 of the second stator and the length Ma1 of the moveable magnet is as shown in FIG. 13(a) and FIG. 13(b), i.e. when Sa3<Ma1=2L-Ga1, linearity is poor within the range of the stroke 2L as shown by the dotted-and-dashed line of FIG. 13(a). The measurable range w is broadened to 2L or more as shown in FIG. 13(b) when Sa3>Ma1=2L-Ga1, but linearity is poor. Therefore, in the vicinity of Sa3=Ma1=2L-Ga1 is most appropriate.

The relationship between the lengths Sa1 and Sa2 of the magnet facing sides of the first stator, the length Sa3 of the magnet facing side of the second stator, and the stroke 2L is as shown in FIG. 14. The solid line in FIG. 14 shows the case where Sa1=Sa2=Sa3, with linearity being good within the entire range of 2L. To the contrary to this, when Sa1 <Sa2, linearity is poor on the side -L, and linearity is poor at the side +L when Sa2<Sa3.

From the above, the sensor conditions giving optimum sensitivity are, taking the stroke to be 2L, that the following are to be substantially fulfilled:

① Regarding the lengths Ma1 and Ma2 of the two moveable magnets, taking the gap between the moveable magnets to be Ga1, Ma1=Ma2=2L-Ga1

② The length of the second stator Sa3=Ma1=2L-Ga1

③ First stator length Sa3x3+Ga2x2 (Sa1=Sa2=Sa3)≥6L-Ga1

④ Gap width Ga1=Ga2=Ga3

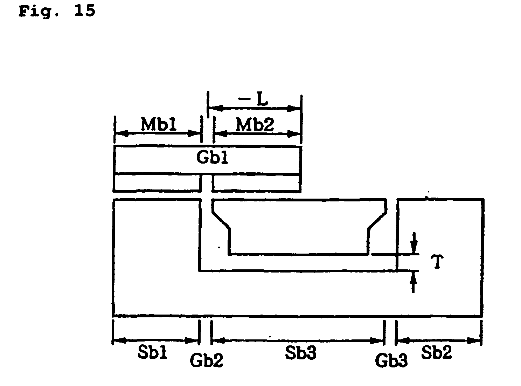

FIG. 15 is an illustration showing the configuration of a linear type non-contact type position sensor that can be made the most compact. The basic configuration is the same as that disclosed in FIG. 7 but the length of the magnet facing sides and the length of the moveable magnets are different.

Lengths of the two magnet facing sides of the first stator are taken to be Sb1 and Sb2, a length of the magnet facing side of the second stator is taken to be Sb3, and lengths of the two moveable magnets are taken to be Mb1 and Mb2. A gap between the moveable magnets is taken to be Gb1 and gaps between the three magnet facing sides lined up along a straight line are taken to be Gb2 and Gb3. The stroke of the moveable magnets is taken to be L to each side from the center, giving a total of 2L.

In the following, a description is given with regards to the relation of the dimension and position of each of the parts to be assembled in the most compact size from the point of view of the relationship between the length of the moveable magnet and the linearity.

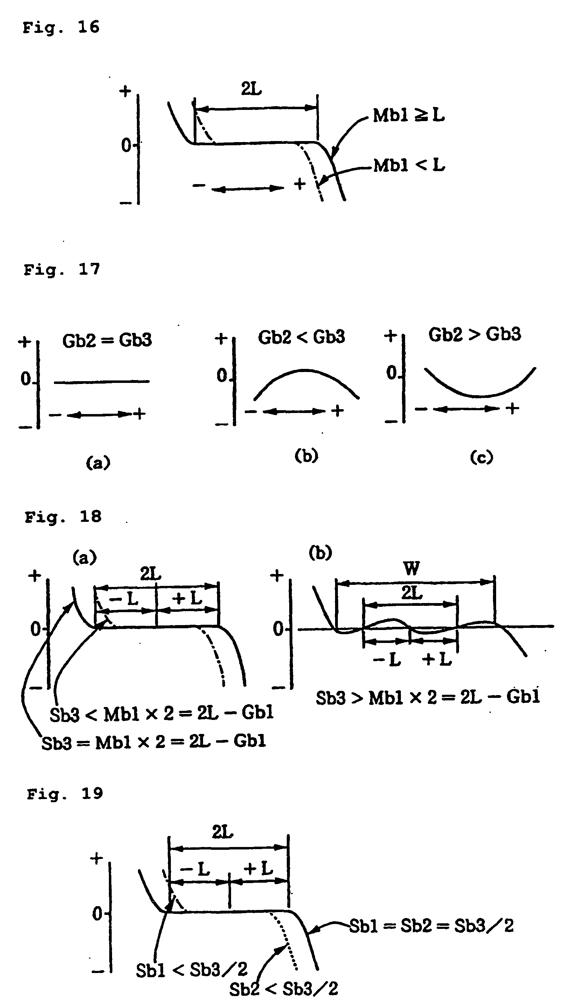

As shown in FIG. 16, it is preferable for the lengths Mb1 and Mb2 of the moveable magnets to be in the vicinity of Mb1=Mb2. Efficiency is good in the vicinity of Mb1=Mb2=L, and is particularly good in the vicinity of Mb1=Mb2=L-(Gb1/2). Linearity of magnetic force is poor in the range of operating stroke 2L as shown in FIG. 16 when Mb1 < L. When Mb1>L, this length is unnecessary with regards to the operating stroke and is therefore not of any use.

FIG. 17 relates to the gaps Gb2 and Gb3. In FIG. 17(a), linearity is good when Gb2=Gb3, and is best in the vicinity of Gb1=Gb2=Gb3. Linearity is poor in the case in FIG. 17(b) where Gb2<Gb3, and in FIG. 17(c) where Gb2>Gb3.

Regarding the relationship between the clearance T of the first and second stators between which the hall element is inserted and Gb2 and Gb3, the vicinity where T<Gb2=Gb3 is appropriate for the same reasons as described for FIG. 11.

Regarding the gaps, linearity is optimal in the vicinity of Gb1=Gb2=Gb3 for the same reasons as described for FIG. 12.

FIG. 18 is an illustration showing the relationship between a length Sb3 of a second stator, a length Mb1 of a moveable magnet and a stroke L. The solid line of FIG. 18(a) shows the case where Sb3=Mb1x2=2L-Gb1, and linearity is maintained for the whole of the operating length 2L. However, when Sb3<Mb1x2=2L-Gb1, linearity is poor at both ends of 2L, as shown by the dotted-and-dashed line. The measuring range W can be broadened when Sb3>Mb1x2=2L-Gb1 as shown in FIG. 18(b) but linearity becomes poor.

The lengths of the magnet facing sides Sb1, Sb2, Sb3 are at their most efficient when Sb1=Sb2=Sb3/2, as shown by the solid line in FIG. 19. Linearity is therefore good when the length of the first stator is Sb3x2+Gb2x2, and is poor when Sb1<Sb3/2, or when Sb2<Sb3/2, as shown by the dotted-and-dashed line and dotted line in FIG. 19. Sb1=Sb2>Sb3/2 also provides good linearity but unfortunately makes the overall length long, and is incompatible with compactness.

The length of the first stator is therefore;

$$\text{first stator length} \geq 2(2L-Gb1)+Gb1x2 \geq 4L$$

From the above, the following relationships are to be substantially fulfilled, taking the stroke to be 2L, to give a linear sensor of optimum compactness;

① Regarding the lengths Mb1 and Mb2 of the two moveable magnets, taking the gap between the moveable magnets to be Gb1, Mb1=Mb2=2L-Gb1/2.
② The length of the second stator Sb3=2Mb1=2L-Gb1
③ First stator length Sb3x2+Gb2x2 (Sb1=Sb2=Sb3/2)≥4L
④ The widths of the gap Gb1=Gb2=Gb3.

With regards to the same stroke L, the length of the first stator of the linear sensor of FIG. 7 is 6L-Ga1 and is 4L for the linear sensor in FIG. 15, so that the linear sensor of FIG. 7 is approximately 50% longer.

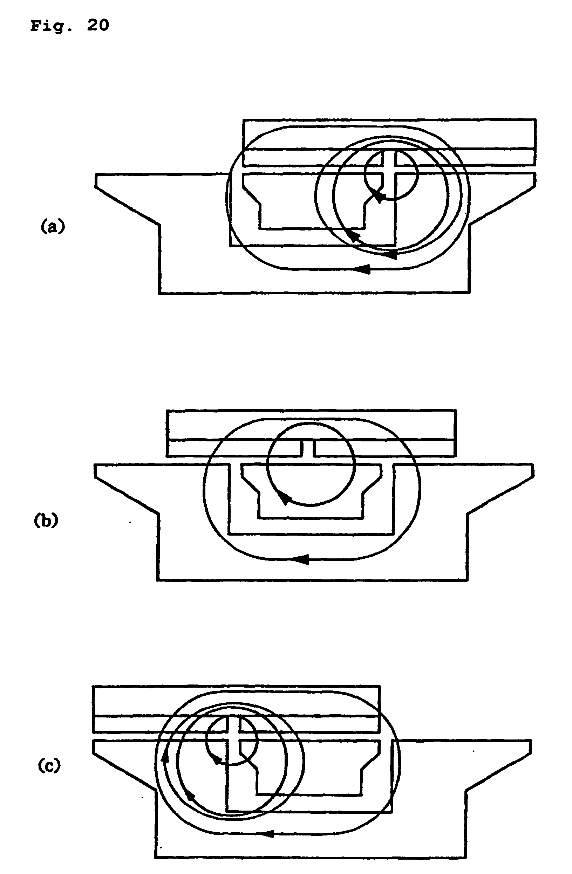

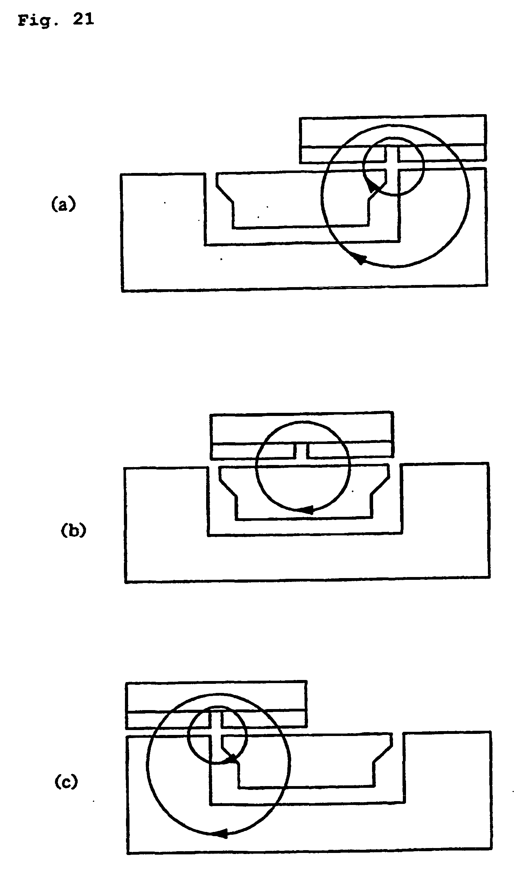

Comparing the linear sensor of FIG. 7 and the linear sensor of FIG. 15, the sensitivity is approximately twice for the linear sensor of FIG. 7. This is described using FIG. 20 and FIG. 21.

FIG. 20 is a view illustrating magnetic circuit forming conditions for the linear sensor of FIG. 7. As shown in the drawings, with the linear sensor of FIG. 7, two magnetic circuits, an inner magnetic circuit and an outer magnetic circuit, are formed when the magnets are in the center (FIG. 20(b)). When magnets move to the right or left, four magnetic circuits are formed, as shown in FIG. 20(a) and FIG. 20(c).

In case of the compact linear sensor of FIG. 15, just one magnetic circuit is formed when the magnets are in the center as shown in FIG. 21(b). Further, when the magnet moves to the right or to the left, two magnetic circuits are formed as shown in FIG. 21(a) and FIG. 21(c), and finally, just half of the magnetic circuit as in the case of FIG. 20 is formed.

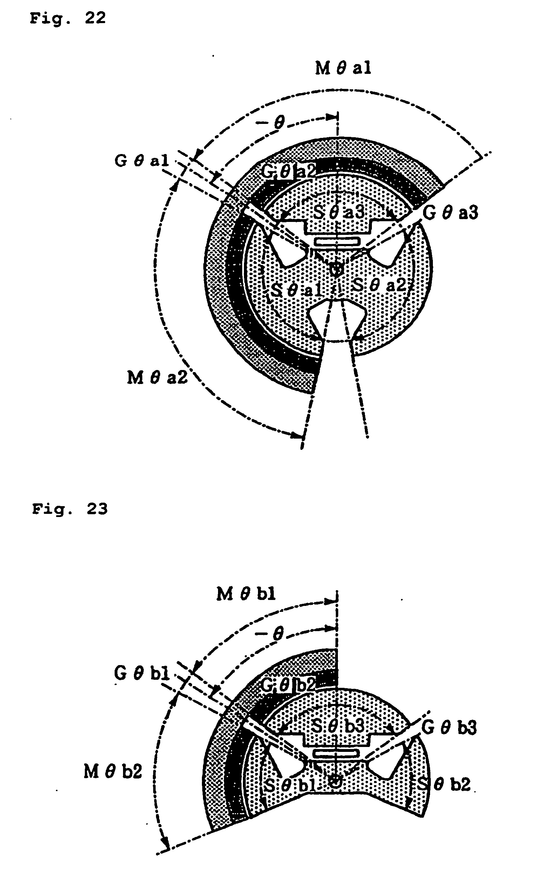

FIG. 22 shows a rotary sensor of optimum sensitivity for a rotary sensor corresponding to the linear sensor of FIG. 7. With a linear sensor the size of each part is expressed as a length, but here the size of each part is expressed as a central angle, i.e. the stroke is expressed as $2\theta$ ($\pm\theta$), the lengths of the moveable magnets are expressed as M$\theta$a1 and M$\theta$a2, the lengths of the magnet facing sides of the first and second stators are expressed as S$\theta$a1, S$\theta$a2 and S$\theta$a3 respectively, and the intervening gaps are expressed as G$\theta$a1, G$\theta$a2 and G$\theta$a3. That described in FIG. 8 to FIG. 14 (with the exception of FIG. 11) for the sensor of FIG. 7 also applies completely to these cases.

The relationships bringing about a rotary sensor with optimum sensitivity satisfy substantially the following conditions:

① Regarding the lengths M$\theta$a1 and M$\theta$a2 of the two moveable magnets, with the gap between the moveable magnets being G$\theta$a1, M$\theta$a1=M$\theta$a2=2$\theta$-G$\theta$a1.
② The length of the second stator S$\theta$a3=M$\theta$a1=2$\theta$-G$\theta$a1
③ The length of the first stator S$\theta$a3x3+G$\theta$a2x2 (S$\theta$a1=S$\theta$a1=S$\theta$a3)≥6$\theta$-G$\theta$a1
④ The gap widths G$\theta$a1=G$\theta$a2=G$\theta$a3.

FIG. 23 shows a rotary sensor corresponding to the linear sensor of FIG. 15 configured to be most compact. Here, the size of each part is expressed as an angle i.e. the stroke is expressed as $2\theta$ ($\pm\theta$), the lengths of the moveable magnets are expressed as M$\theta$b1 and M$\theta$b2, the lengths of the first and second stators are expressed as S$\theta$b1 and S$\theta$b2, and the intervening gaps are expressed as G$\theta$b1, G$\theta$b2 and G$\theta$b3. That described in FIG. 16 to FIG. 19 for the sensor of FIG. 15 also applies completely to these cases.

Therefore, the following relationships are to be fulfilled, taking the stroke to be 2$\theta$, to give a rotary sensor of optimum compactness;

① Regarding the lengths M$\theta$b1 and M$\theta$b2 of the two variable magnets, with the gap between the variable magnets to be G$\theta$b1, M$\theta$b1=M$\theta$b2=2$\theta$-G$\theta$b1
② The length of the second stator S$\theta$b3=2M$\theta$b1=2$\theta$-G$\theta$b1
③ The length of the first stator S$\theta$b3x2+G$\theta$b2x2 (S$\theta$b1=S$\theta$b2=S$\theta$b3/2)≥4$\theta$
④ The gap widths G$\theta$b1=G$\theta$b2=G$\theta$b3

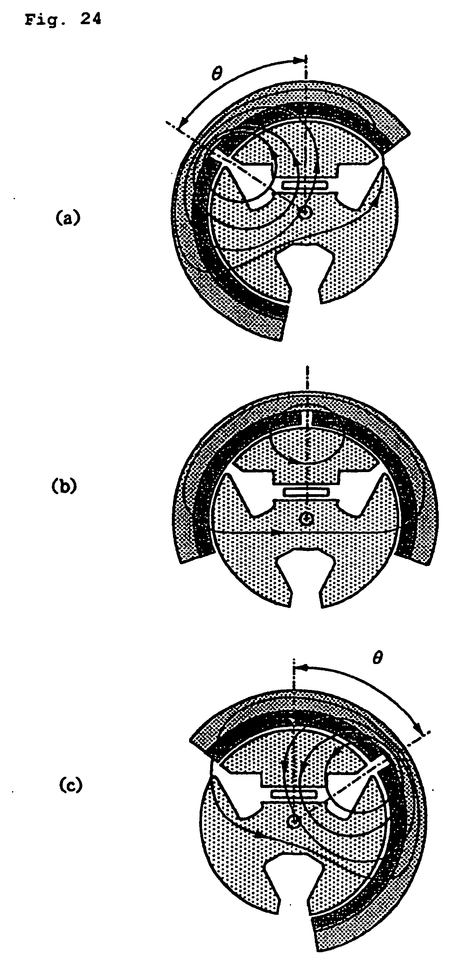

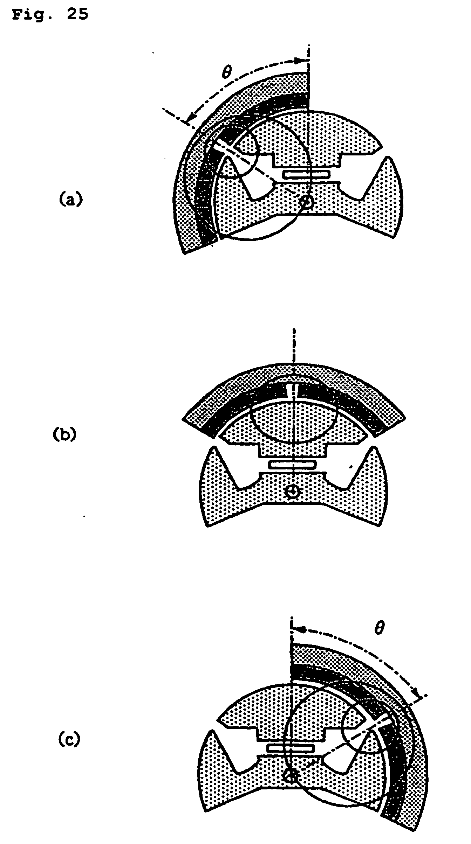

Comparing the rotary sensor of FIG. 22 and the rotary sensor of FIG. 23, the sensitivity is approximately twice for the rotary sensor of FIG. 22. This is described using FIG. 24 and FIG. 25.

FIG. 24 is a view illustrating magnetic circuit forming conditions for the rotary sensor of FIG. 22. As shown in the drawings, with the rotary sensor of FIG. 22, magnetic circuits, an inner magnetic circuit and an outer magnetic circuit, are formed when the magnets are in the center (FIG. 24(b)). When magnets rotate to the right or left, four magnetic circuits are formed, as shown in FIG. 24(a) and FIG. 24(c).

With the compact rotary sensor of FIG. 23, just one magnetic circuit is formed when the magnets are in the center as shown in FIG. 25. Further, when the magnet rotates to the right or to the left, two magnetic circuits are formed as shown in FIG. 25(a) and FIG. 25(c), and finally, just half of the magnetic circuit as in the case of FIG. 24 is formed.

Industrial Applicability

The non-contact-type position sensor of the present invention described above comprises a first stator having two magnet facing sides, a second stator having one magnet facing side along a locus linking the above-mentioned two magnet facing sides of the first stator, a hall element provided between the first and second stators, and two magnets located next to each other along the direction of the above-mentioned locus and being free to move along the locus as to face the above-mentioned three magnet facing sides. This enables implementation of a non-contact type position sensor where, in the case of application to a rotary sensor, an arbitrary angle of usage can be freely set, and in the case of application to a linear sensor, a magnet can be made thick without increasing leakage of magnetic flux.

In the case of a linear sensor, the first and second stators are housed within a case, and a guide section maintaining a fixed distance between the magnets and the first and second stators, and a bearing section supporting the slider in a freely retractable manner are formed within the case. A non-contact-type position sensor can therefore be obtained where a fixed position can be returned to even if the slider and magnets move due to vibrations etc. and upon which it is difficult for vibrations to exert any influence.

In the case of a rotary sensor, if the first and second stators are housed within the case, and a guide pin is erected at the cover of the case so as to pass through and support the first stator, with the rotor being axially supported in a freely rotatable manner at the guide pin passing through the first stator, even if the rotor and magnets move due to vibrations etc. the rotor and magnets can be made to return to a fixed location.

Further, when the two magnet facing sides of the first stator are located in a symmetrical manner at the sides of the one magnet facing side of the second stator, and lengths of the magnet facing sides of the first stator, a length of the magnet facing side of the second stator, lengths of the two magnets, a gap between the magnets, and gaps between the three magnet facing sides are taken to have a prescribed relationship, then a configuration where optimum sensitivity is achieved, or a configuration that is the most compact, can be brought about.

**Claims**

1. A non-contact-type position sensor comprising: a first stator (101, 111, 121, 131, 141) having two magnet facing sides (101a,b; 111a,b), a second stator (102, 112, 122, 132, 142) having one magnet facing side (102a) along a locus linking said two magnet facing sides (101a,b; 111a,b) of said first stator (101, 111, 121, 131, 141), a hall element (103, 113, 123, 133, 143) provided between said first (101, 111, 121, 131, 141) and second (102, 112, 122, 132, 142) stators, and two magnets (104, 105; 114, 115; 124, 125; 134, 135; 144, 145) located next to each other along the direction of said locus facing said three magnet facing sides (101a,b, 111a,b) so as to be moveable along said locus,
   **characterized in that** said first stator (101, 111, 121, 131, 141) is integrally formed of a magnetically conductive material such that a magnetic flux circuit can pass through it between its two magnet facing sides (101a,b; 111a,b), and that the lengths of said two magnets are essentially equal.

2. The non-contact-type position sensor of claim 1, wherein said magnets (104, 105; 124, 125) are plate-shaped magnets supported by a slider (106, 126) and said slider (106, 126) is retractable along a straight-line locus.

3. The non-contact-type position sensor of claim 1, wherein said magnets (114, 115; 134, 135; 144, 145) are curved plate-shaped magnets supported by a rotor (136, 146) and said rotor (136, 146) is rotatable along a circular arc-shaped locus.

4. The non-contact-type position sensor of claim 2, wherein said first (121) and second (122) stators are housed within a case, and a guide section maintaining a fixed distance between said magnets (104, 105; 124, 125) and said first (121) and second (122) stators, and a bearing section supporting said slider (106, 126) in a freely retractable manner are formed within said case.

5. The non-contact-type position sensor of claim 4, wherein said guide section has rails formed within said case and one or a plurality of rollers provided at said slider (106, 126).

6. The non-contact-type position sensor of claim 5, wherein said rollers are provided as a pair close to the centers of gravity of said two magnets (104, 105; 124, 125) in directions orthogonal to the direction of retraction of said slider (106, 126).

7. The non-contact-type position sensor of claim 3, wherein said first (131) and second (132) stators are housed with a case, a guide pin is erected at the cover of said case so as to pass through and support said first stator (131), with said rotor (136) being axially supported in a freely rotatable manner at said guide pin passing through said first stator (131).

8. The non-contact-type position sensor of claim 3, wherein said first (141) and second (142) stators are housed within a case, a hollow coupling section is formed at said rotor (146), and a projection section fitting with said hollow coupling section of said rotor (146) is provided at said case.

9. The non-contact-type position sensor of any one of claims 4 to 8, wherein width in a direction orthogonal to said locus of said first (131, 141) and second (132, 142) stators and width in a direction orthogonal to said locus of said moveable magnets (134, 135) are substantially the same.

10. The non-contact-type position sensor of claim 2, wherein said two magnet facing sides of said first stator (101, 121) are located in a symmetrical manner at both sides of said one magnet facing side of said second stator (102, 122), lengths of said magnet facing sides of said first stator (101, 121) are taken to be Sa1 and Sa2, a length of said magnet facing side of said second stator (102, 122) is taken to be Sa3, lengths of said two magnets (104, 105; 124, 125) are taken to be Ma1 and Ma2, a gap between said magnets (104, 105; 124, 125) is taken to be Ga1, gaps between said three magnet facing sides are taken to be Ga2 and Ga3, and a stroke of said magnets (104, 105; 124, 125) is taken to be 2L, so that the relationships

$$Ma1 = Ma2 = 2L - Ga1$$

$$Ga1 = Ga2 = Ga3$$

$$Sa1 = Sa2 = Sa3 = Ma1$$

are substantially satisfied.

11. The non-contact-type position sensor of claim 2, wherein said two magnet facing sides of said first stator (101, 121) are located in a symmetrical manner at both sides of said one magnet facing side of said second stator (102, 122), lengths of said two magnet facing sides of said first stator (101, 121) are taken to be Sb1 and Sb2, a length of said magnet facing side of said second stator (102, 122) is taken to be Sb3, lengths of said two magnets (104, 105; 124, 125) are taken to be Mb1 and Mb2, a gap between said magnets (104, 105; 124, 125) is taken to be Gb1, gaps between said three magnet facing sides are taken to be Gb2 and Gb3, and a stroke of said magnets (104, 105; 124, 125) is taken to be 2L, so that the relationships

$$Mb1 = Mb2 = L - Gb1/2$$

$$Gb1 = Gb2 = Gb3$$

$$Sb1 = Sb2 = Sb3/2 = Mb1$$

are substantially satisfied.

12. The non-contact-type position sensor of claim 3, wherein said two magnet facing sides of said first stator (111, 131, 141) are located in a symmetrical manner at both sides of said one magnet facing side of said second stator (112, 132, 142), central angles of said two magnet facing sides of said first stator (111, 131, 141) are taken to be $S\theta a1$ and $S\theta a2$, a central angle of said magnet facing side of the second stator (112, 132, 142) is taken to be $S\theta a3$, central angles of said two magnets are taken to be $M\theta a1$ and $M\theta a2$, a gap between said magnets is taken to be $G\theta a1$, gaps between said three magnet facing sides are taken to be $\theta a2$ and $G\theta a3$, and a stroke of said magnets is taken to be $2\theta$, so that the relationships

$$M\theta a1 = M\theta a2 = 2\theta - G\theta a1$$

$$G\theta a1 = G\theta a2 = G\theta a3$$

$$S\theta a1 = S\theta a2 = S\theta a3 = M\theta a1$$

are substantially satisfied.

13. The non-contact-type position sensor of claim 3, wherein said two magnet facing sides of said first stator (111, 131, 141) are located in a symmetrical manner at both sides of said one magnet facing side of said second stator (112, 132, 142), central angles of said two magnet facing sides of said first stator (111, 131, 141) are taken to be $S\theta b1$ and $S\theta b2$, a central angle of said magnet facing side of said second stator (112, 132, 142) is taken to be $S\theta b3$, central angles of said two magnets (114, 115; 134, 135; 144, 145) are taken to be $M\theta b1$ and $M\theta b2$, a gap between said magnets (114, 115; 134, 135; 144, 145) is taken to be $G\theta b1$, gaps between said three magnet facing sides are taken to be $G\theta b2$ and $G\theta b3$, and a stroke of said magnets (114, 115; 134, 135; 144, 145) is taken to be 2θ, so that the relationships

$$M\theta b1 = M\theta b2 = \theta - G\theta b1/2$$

$$G\theta b1 = G\theta b2 = G\theta b3$$

$$S\theta b1 = S\theta b2 = S\theta b3/2 = M\theta b1$$

are substantially satisfied.

14. The non-contact-type position sensor of claim 10 or claim 11, wherein the intervening gap between said first stator (101, 121) and second stator (102, 122) into which said hall element (103, 123) is inserted is substantially the same as the gap between said magnets (104, 105; 124, 125) and the gaps between said three magnet facing sides.

**Patentansprüche**

1. Kontaktloser Positionssensor, der umfasst: einen ersten Stator (101, 111, 121, 131, 141), der zwei einem Magneten gegenüberliegende Flächen (101a, b; 111a, b) besitzt, einen zweiten Stator (102, 112, 122, 132, 142), der eine einem Magneten gegenüberliegende Fläche (102a) längs einer Ortskurve, die die zwei einem Magneten gegenüberliegenden Flächen (101a, b; 111a, b) des ersten Stators (101, 111, 121, 131, 141) miteinander verbindet, besitzt, ein Hall-Element (103, 113, 123, 133, 143), das zwischen dem ersten Stator (101, 111, 121, 131, 141) und dem zweiten Stator (102, 112, 122, 132, 142) vorgesehen ist, und zwei Magneten (104, 105; 114, 115; 124, 125; 134, 135; 144, 145), die sich in Richtung der Ortskurve gegenüber den drei einem Magneten gegenüberliegenden Flächen (101a, b, 111a, b) befinden, um längs der Ortskurve beweglich zu sein,

   **dadurch gekennzeichnet, dass** der erste Stator (101, 111, 121, 131, 141) aus einem magnetisch leitenden Material einteilig ausgebildet ist, so dass ein Magnetflusskreis zwischen seinen zwei einem Magneten gegenüberliegenden Flächen (101a, b; 111a, b) durch ihn verlaufen kann und dass die Längen der beiden Magneten im Wesentlichen gleich sind.

2. Kontaktloser Positionssensor nach Anspruch 1, bei dem die Magneten (104, 105; 124, 125) plattenförmige Magneten sind, die durch einen Gleiter (106, 126) unterstützt sind, und der Gleiter (106, 126) längs einer geradlinigen Ortskurve zurückziehbar ist.

3. Kontaktloser Positionssensor nach Anspruch 1, bei dem die Magneten (114, 115; 134, 135; 144, 145) gekrümmte plattenförmige Magneten sind, die durch einen Rotor (136, 146) unterstützt sind, und der Rotor (136, 146) längs einer kreisbogenförmigen Ortskurve drehbar ist.

4. Kontaktloser Positionssensor nach Anspruch 2, bei dem der erste Stator (121) und der zweite Stator (122) in einem Gehäuse untergebracht sind und ein Führungsabschnitt, der zwischen den Magneten (104, 105; 124, 125) und dem ersten Stator (121) und dem zweiten Stator (122) einen festen Abstand aufrechterhält, sowie ein Lagerungsabschnitt, der den Gleiter (106, 126) in einer frei zurückziehbaren Weise unterstützt, in dem Gehäuse ausgebildet sind.

5. Kontaktloser Positionssensor nach Anspruch 4, bei dem der Führungsabschnitt Schienen, die in dem Gehäuse ausgebildet sind, und eine oder mehrere Rollen, die an dem Gleiter (106, 126) vorgesehen sind, besitzt.

6. Kontaktloser Positionssensor nach Anspruch 5, bei dem die Walzen als ein Paar in der Nähe der Schwerpunkte der beiden Magneten (104, 105; 124, 125) in Richtungen, die zu der Rückziehrichtung des Gleiters (106, 126) senkrecht sind, vorgesehen sind.

7. Kontaktloser Positionssensor nach Anspruch 3, bei dem der erste Stator (131) und der zweite Stator (132) in einem Gehäuse untergebracht sind und ein Führungsstift von der Abdeckung des Gehäuses vorsteht, derart, dass er durch den ersten Stator (131) verläuft und ihn unterstützt, wobei der Rotor (136) in frei drehbarer Weise an dem Führungsstift, der durch den ersten Stator (131) verläuft, axial unterstützt ist.

8. Kontaktloser Positionssensor nach Anspruch 3, bei dem der erste Stator (141) und der zweite Stator (142) in einem Gehäuse untergebracht sind, an dem Rotor (146) ein hohler Kopplungsabschnitt ausgebildet ist und ein Vorsprungsabschnitt, der in den hohlen Kopplungsabschnitt des Rotors (146) eingepasst ist, am Gehäuse vorgesehen ist.

9. Kontaktloser Positionssensor nach einem der Ansprüche 4 bis 8, bei dem die Breite in einer Richtung senkrecht zur Ortskurve des ersten Stators (131, 141) und des zweiten Stators (132, 142) und die Breite in einer Richtung senkrecht zur Ortskurve der beweglichen Magneten (134, 135) im Wesentlichen gleich sind.

10. Kontaktloser Positionssensor nach Anspruch 2, bei dem sich die zwei einem Magneten gegenüberliegenden Flächen des ersten Stators (101, 121) symmetrisch auf beiden Seiten der einen einem Magneten gegenüberliegenden Fläche des zweiten Stators (102, 122) befinden, wobei die Längen der einem Magneten gegenüberliegenden Flächen des ersten Stators (101, 121) mit Sa1 bzw. Sa2 bezeichnet werden, eine Länge der einem Magneten gegenüberliegenden Fläche des zweiten Stators (102, 122) mit Sa3 bezeichnet wird, die Längen der zwei Magneten (104, 105; 124, 125) mit Ma1 bzw. Ma2 bezeichnet werden, ein Spalt zwischen den Magneten (104, 105; 124, 125) mit Ga1 bezeichnet wird, Spalte zwischen den drei einem Magneten gegenüberliegenden Flächen mit Ga2 bzw. Ga3 bezeichnet werden und ein Hub der Magneten (104, 105; 124, 125) mit 2L bezeichnet wird, so dass die Beziehungen

$$Ma1 = Ma2 = 2L - Ga1,$$

$$Ga1 = Ga2 = Ga3,$$

$$Sa1 = Sa2 = Sa3 = Ma1$$

im Wesentlichen erfüllt sind.

**11.** Kontaktloser Positionssensor nach Anspruch 2, bei dem sich die zwei einem Magneten gegenüberliegenden Flächen des ersten Stators (101, 102) symmetrisch auf beiden Seiten der einen einem Magneten gegenüberliegenden Fläche des zweiten Stators (102, 122) befinden, wobei die Längen der zwei einem Magneten gegenüberliegenden Flächen des ersten Stators (101, 121) mit Sb1 bzw. Sb2 bezeichnet werden, eine Länge der einem Magneten gegenüberliegenden Fläche des zweiten Stators (102, 122) mit Sb3 bezeichnet wird, die Längen der zwei Magneten (104, 105; 124, 125) mit Mb1 bzw. Mb2 bezeichnet werden, ein Spalt zwischen den Magneten (104, 105; 124, 125) mit Gb1 bezeichnet wird, Spalte zwischen den drei einem Magneten gegenüberliegenden Flächen mit Gb2 bzw. Gb3 bezeichnet werden und ein Hub der Magneten (104, 105; 124, 125) mit 2L bezeichnet wird, so dass die Beziehungen

$$Mb1 = Mb2 = L - Gb1/2,$$

$$Gb1 = Gb2 = Gb3$$

$$Sb1 = Sb2 = Sb3/2 = Mb1$$

im Wesentlichen erfüllt sind.

**12.** Kontaktloser Positionssensor nach Anspruch 3, bei dem sich die zwei einem Magneten gegenüberliegenden Flächen des ersten Stators (111, 131, 141) symmetrisch auf beiden Seiten der einen einem Magneten gegenüberliegenden Fläche des zweiten Stators (112, 132, 142) befinden, Mittenwinkel der zwei einem Magneten gegenüberliegenden Flächen des ersten Stators (111, 131, 141) mit $S\theta a1$ bzw. $S\theta a2$ bezeichnet werden, ein Mittenwinkel der einem Magneten gegenüberliegenden Fläche des zweiten Stators (112, 132, 142) mit $S\theta a3$ bezeichnet wird, Mittenwinkel der zwei Magneten mit $M\theta a1$ bzw. $M\theta a2$ bezeichnet werden, ein Spalt zwischen den Magneten mit $G\theta a1$ bezeichnet wird, Spalte zwischen den drei einem Magneten gegenüberliegenden Flächen mit $G\theta a2$ bzw. $G\theta a3$ bezeichnet werden und ein Hub der Magneten mit $2\theta$ bezeichnet wird, so dass die Beziehungen

$$M\theta a1 = M\theta a2 = 2\theta - G\theta a1,$$

$$G\theta a1 = G\theta a2 = G\theta a3,$$

$$S\theta a1 = S\theta a2 = S\theta a3 = M\theta a1$$

im Wesentlichen erfüllt sind.

**13.** Kontaktloser Positionssensor nach Anspruch 3, bei dem sich die zwei einem Magneten gegenüberliegenden Flächen des ersten Stators (111, 131, 141) symmetrisch auf beiden Seiten der einen einem Magneten gegenüberliegenden Fläche des zweiten Stators (112, 132, 142) befinden, wobei Mittenwinkel der zwei einem Magneten gegenüberliegenden Flächen des ersten Stators (111, 131, 141) mit $S\theta b1$ bzw. $S\theta b2$ bezeichnet werden, ein Mittenwinkel der einem Magneten gegenüberliegenden Fläche des zweiten Stators (112, 132, 142) mit $S\theta b3$ bezeichnet wird, Mittenwinkel der zwei Magneten (114, 115; 134, 135; 144, 145) mit $M\theta b1$ bzw. $M\theta b2$ bezeichnet werden, ein Spalt zwischen den Magneten (114, 115; 134, 135; 144, 145) mit $G\theta b1$ bezeichnet wird, Spalte zwischen den drei einem Magneten gegenüberliegenden Flächen mit $G\theta b2$ bzw. $G\theta b3$ bezeichnet werden und ein Hub der Magneten (114, 115; 134, 135; 144, 145) mit $2\theta$ bezeichnet wird, so dass die Beziehungen

$$M\theta b1 = M\theta b2 = \theta - G\theta b1/2,$$

$$G\theta b1 = G\theta b2 = G\theta b3,$$

$$S\theta b1 = S\theta b2 = S\theta b3/2 = M\theta b1$$

im Wesentlichen erfüllt sind.

14. Kontaktloser Positionssensor nach Anspruch 10 oder Anspruch 11, bei dem der zwischen dem ersten Stator (101, 121) und dem zweiten Stator (102, 122) vorhandene Spalt, in den das Hall-Element (103, 123) eingefügt ist, im Wesentlichen gleich dem Spalt zwischen den Magneten (104, 105; 124, 125) und den Spalten zwischen den drei einem Magneten gegenüberliegenden Flächen ist.

**Revendications**

1. Capteur de position sans contact comprenant : un premier stator (101, 111, 121, 131, 141) comprenant deux côtés (101a,b ; 111a,b) faisant face à un aimant, un deuxième stator (102, 112, 122, 132, 142) comprenant un côté (102a) faisant face à un aimant le long d'un axe reliant lesdits deux côtés (101a,b ; 111a,b) faisant face à un aimant du premier stator (101, 111, 121, 131, 141), un élément à effet Hall (103, 113, 123, 133, 143) situé entre lesdits premier (101, 111, 121, 131, 141) et deuxième (102, 112, 122, 132, 142) stators, et deux aimants (104, 105 ; 114, 115 ; 124, 125 ; 134, 135 ; 144, 145) situés côte à côte, dans le sens dudit axe faisant face auxdits trois côtés (101a,b ; 111a, b) faisant face à un aimant, de façon à pouvoir se déplacer le long dudit axe, **caractérisé en ce que** ledit premier stator (101, 111, 121, 131, 141) est intégralement formé d'un matériau conducteur de magnétisme, de sorte qu'un circuit de flux magnétique peut le traverser entre ses deux côtés (101a,b ; 111a,b) faisant face à un aimant et **en ce que** les longueurs desdits deux aimants sont essentiellement égales.

2. Capteur de position sans contact selon la revendication 1, dans lequel lesdits aimants (104, 105 ; 124, 125) sont des aimants en forme de plaques supportés par un coulisseau (106, 126) et ledit coulisseau (106, 126) peut se rétracter le long d'un axe en ligne droite.

3. Capteur de position sans contact selon la revendication 1, dans lequel lesdits aimants (114, 115 ; 134, 135 ; 144, 145) sont des aimants en forme de plaques incurvées supportés par un rotor (136, 146) et ledit rotor (136, 146) peut tourner autour d'un axe en forme d'arc circulaire.

4. Capteur de position sans contact selon la revendication 2, dans lequel lesdits premier (121) et deuxième (122) stators sont logés dans un boîtier, et une section de guidage maintenant une distance fixe entre lesdits aimants (104, 105 ; 124, 125) et lesdits premier (121) et deuxième (122) stators, et une section de support supportant ledit coulisseau (106, 126) en lui permettant de se rétracter librement, sont formées dans ledit boîtier.

5. Capteur de position sans contact selon la revendication 4, dans lequel, dans ladite section de guidage, des rails sont formés dans ledit boîtier et un ou plusieurs galets sont placés au niveau dudit coulisseau (106, 126).

6. Capteur de position sans contact selon la revendication 5, dans lequel les galets sont disposés par paires, à proximité des centres de gravité desdits deux aimants (104, 105 ; 124, 125), dans des sens orthogonaux au sens de rétraction dudit coulisseau (106, 126).

7. Capteur de position sans contact selon la revendication 3, dans lequel lesdits premier (131) et deuxième (132) stators sont logés dans un boîtier, une tige de guidage se dresse au niveau du couvercle dudit boîtier de façon à traverser et à supporter ledit premier stator (131), ledit rotor (136) étant supporté axialement de manière à pouvoir se rétracter librement au niveau de ladite tige de guidage traversant le premier stator (131).

8. Capteur de position sans contact selon la revendication 3, dans lequel lesdits premier (141) et deuxième (142) stators sont logés dans un boîtier, une section d'accouplement creuse est formée au niveau dudit rotor (146) et une section en saillie correspondant à ladite section d'accouplement creuse dudit rotor (146) est formée au niveau dudit boîtier.

9. Capteur de position sans contact selon l'une quelconque des revendications 4 à 8, dans lequel la largeur desdits premier (131, 141) et deuxième (132, 142) stators dans un sens orthogonal audit axe et la largeur desdits aimants mobiles (134, 135) dans un sens orthogonal audit axe sont essentiellement égales.

10. Capteur de position sans contact selon la revendication 2, dans lequel lesdits deux côtés faisant face à un aimant dudit premier stator (101, 121) sont situés de manière symétrique de part et d'autre dudit un côté faisant face à un aimant dudit deuxième stator (102, 122), les longueurs desdits côtés faisant face à un aimant dudit premier stator (101, 121) sont définies par Sa1 et Sa2, la longueur dudit côté faisant face à un aimant dudit deuxième stator (102, 122) est définie par Sa3, les longueurs desdits deux aimants (104, 105 ; 124, 125) sont définies par Ma1 et Ma2, l'espace situé entre lesdits aimants (104, 105 ; 124, 125) est défini par Ga1, les espaces situés entre lesdits trois côtés faisant face à un aimant sont définis par Ga2 et Ga3 et la course desdits aimants (104, 105 ; 124, 125) est définie par 2L, si bien que les relations :

$$Ma1 = Ma2 = 2L - Ga1$$

$$Ga1 = Ga2 = Ga3$$

$$Sa1 = Sa2 = Sa3 = Ma1$$

sont essentiellement satisfaites.

11. Capteur de position sans contact selon la revendication 2, dans lequel lesdits deux côtés faisant face à un aimant dudit premier stator (101, 121) sont situés de manière symétrique de part et d'autre dudit un côté faisant face à un aimant dudit deuxième stator (102, 122), les longueurs desdits deux côtés faisant face à un aimant dudit premier stator (101, 121) sont définies par Sb1 et Sb2, la longueur dudit côté faisant face à un aimant dudit deuxième stator (102, 122) est définie par Sb3, les longueurs desdits deux aimants (104, 105 ; 124, 125) sont définies par Mb1 et Mb2, l'espace situé entre lesdits aimants (104, 105 ; 124, 125) est défini par Gb1, les espaces situés entre lesdits trois côtés faisant face à un aimant sont définis par Gb2 et Gb3 et la course desdits aimants (104, 105 ; 124, 125) est définie par 2L, si bien que les relations :

$$Mb1 = Mb2 = L - Gb1/2$$

$$Gb1 = Gb2 = Gb3$$

$$Sb1 = Sb2 = Sb3/2 = Mb1$$

sont essentiellement satisfaites.

12. Capteur de position sans contact selon la revendication 3, dans lequel lesdits deux côtés faisant face à un aimant dudit stator (111, 131, 141) sont situés de manière symétrique de part et d'autre dudit un côté faisant face à un aimant dudit deuxième stator (112, 132, 142), les angles au centre desdits deux côtés faisant face à un aimant dudit premier stator (111, 131, 141) sont définis par Sθa1 et Sθa2, l'angle au centre dudit côté faisant face à un aimant dudit deuxième stator (112, 132, 142) est défini par Sθa3, les angles au centre desdits deux aimants sont définis par Mθa1 et Mθa2, l'espace situé entre lesdits aimants est défini par Gθa1, les espaces situés entre lesdits trois côtés faisant face à un aimant sont définis par Gθa2 et Gθa3 et la course desdits aimants est définie par 2θ, si bien que les relations :

$$Mθa1 = Mθa2 = 2θ - Gθa1$$

$$Gθa1 = Gθa2 = Gθa3$$

$$Sθa1 = Sθa2 = Sθa3 = Mθa1$$

sont essentiellement satisfaites.

13. Capteur de position sans contact selon la revendication 3, dans lequel lesdits deux côtés faisant face à un aimant dudit premier stator (111, 131, 141) sont situés de manière symétrique de part et d'autre dudit un côté faisant face à un aimant dudit deuxième stator (112, 132, 142), les angles au centre desdits deux côtés faisant face à un aimant dudit premier stator (111, 131, 141) sont définis par Sθb1 et Sθb2, l'angle au centre dudit côté faisant face à un aimant dudit deuxième stator (112, 132, 142) est défini par Sθb3, les angles au centre desdits deux aimants (114, 115 ; 134, 135 ; 144, 145) sont définis par Mθb1 et Mθb2, l'espace situé entre lesdits aimants (114, 115 ; 134, 135 ; 144, 145) est défini par Gθb1, les espaces situés entre lesdits trois côtés faisant face à un aimant sont définis par Gθb2 et Gθb3 et la course desdits aimants (114, 115 ; 134, 135 ; 144, 145) est définie par 2θ, si bien que les relations :

$$Mθb1 = Mθb2 = θ - Gθb1/2$$

$$Gθb1 = Gθb2 = Gθb3$$

$$Sθb1 = Sθb2 = Sθb3/2 = Mθb1$$

sont essentiellement satisfaites.

14. Capteur de position sans contact selon la revendication 10 ou 11, dans lequel l'espace interposé entre lesdits premier (101, 121) et deuxième (102, 122) stators, dans lequel est inséré ledit élément à effet Hall (103, 123), est essentiellement identique à l'espace situé entre lesdits aimants (104, 105 ; 124, 125) et aux espaces situés entre lesdits trois côtés faisant face à un aimant.

Fig. 1

Fig. 2

Fig. 3

(a)

(b)

Fig. 4

Fig. 5

(a)

(b)

(c)

Fig. 6

Output for the Hall element

measurable region

α

angle or length

0

Fig. 7

L

Ma1    Ga1    Ma2

T

Sa1    Sa2    Sa3

Ga2    Ga3

Fig. 8

Mal = Ma2

(a)

Mal > Ma2

(b)

Mal < Ma2

(c)

Fig. 9

Fig. 10

Ga2 = Ga3

(a)

Ga2 < Ga3

(b)

Ga2 > Ga3

(c)

Fig. 11

T = Ga2 = Ga3

(a)

T > Ga2 = Ga3

(a)

Fig. 12

Ga1 = Ga2 = Ga3

Ga1 > Ga2 = Ga3

Ga1 < Ga2 = Ga3

(a)

(b)

(c)

Fig. 13

(a)

(b)

2L

−L   +L

W

2L

−L   +L

Sa3 < Ma1 = 2L − Ga1
Sa3 = Ma1 = 2L − Ga1

Sa3 > Ma1 = 2L − Ga1

Fig. 14

2L

−L   +L

Sa1 = Sa2 = Sa3

Sa1 < Sa3

Sa2 < Sa3

Fig. 15

Fig. 16

$Mb1 \geqq L$

$Mb1 < L$

$2L$

Fig. 17

$Gb2 = Gb3$

$Gb2 < Gb3$

$Gb2 > Gb3$

(a)

(b)

(c)

Fig. 18

(a)

(b)

$2L$

$-L$ $+L$

$W$

$2L$

$-L$ $+L$

$Sb3 < Mb1 \times 2 = 2L - Gb1$

$Sb3 = Mb1 \times 2 = 2L - Gb1$

$Sb3 > Mb1 \times 2 = 2L - Gb1$

Fig. 19

$2L$

$-L$ $+L$

$Sb1 = Sb2 = Sb3/2$

$Sb1 < Sb3/2$

$Sb2 < Sb3/2$

Fig. 20

(a)

(b)

(c)

Fig. 21

(a)

(b)

(c)

Fig. 22

Fig. 23

**Fig. 24**

(a)

(b)

(c)

Fig. 25

(a)

(b)

(c)

Fig. 26

Fig. 27